**Europäisches Patentamt**

**European Patent Office**

**Office européen des brevets**

(19)

(11) Veröffentlichungsnummer: **0 113 652**
**B1**

(12)

# EUROPÄISCHE PATENTSCHRIFT

(45) Veröffentlichungstag der Patentschrift:
**13.05.87**

(51) Int. Cl.⁴: **G 01 N 1/12, C 21 C 5/46**

(21) Anmeldenummer: **83890216.1**

(22) Anmeldetag: **28.11.83**

(54) **Magazin für Mess- und/oder Probenahmesonden.**

(30) Priorität: **09.12.82 AT 4473/82**

(43) Veröffentlichungstag der Anmeldung:
**18.07.84 Patentblatt 84/29**

(45) Bekanntmachung des Hinweises auf die Patenterteilung:
**13.05.87 Patentblatt 87/20**

(84) Benannte Vertragsstaaten:
**BE DE FR GB IT LU NL SE**

(56) Entgegenhaltungen:
**EP - A - 0 009 585**
**DE - A - 2 232 135**
**US - A - 3 753 507**
**US - A - 4 071 150**

**Die Akte enthält technische Angaben, die nach dem Eingang der Anmeldung eingereicht wurden und die nicht in dieser Patentschrift enthalten sind.**

(73) Patentinhaber: **VOEST-ALPINE Aktiengesellschaft, Muldenstrasse 5, A-4020 Linz (AT)**

(72) Erfinder: **Fohler, Johann, Efeugang 10, A-4040 Puchenau (AT)**

(74) Vertreter: **Wolfram, Gustav, Dipl.-Ing., Schwindgasse 7 P.O. Box 205, A-1041 Wien (AT)**

## Beschreibung

Die Erfindung betrifft ein Magazin für Mess- und/oder Probenahmesonden, insbesondere für Stahlwerke, mit die Sonden in horizontaler Lage aufnehmenden Vorratsfächern und parallel zu den Sonden angeordneten Ein- und Ausgabeöffnungen, wobei an den Ausgabeöffnungen eine Fördervorrichtung zum Ausgeben der Sonden zu einer die Sonden in eine vertikale Position bringende Aufrichtvorrichtung vorgesehen ist.

Ein Magazin dieser Art ist aus der DE-A-30 44 609 bekannt. Dieses bekannte Magazin weist sich vertikal erstreckende Vorratsfächer auf, die bedingt durch das Eigengewicht der Sonden nur mit einer begrenzten Anzahl von Sonden gefüllt werden können. Schwierigkeiten ergeben sich beim Füllen der Magazine und bei der Entnahme von Sonden. Füllt man die Magazine in einer Richtung quer zur Längsrichtung der Sonden, so ist es schwierig, die mittig zwischen anderen Vorratsfächern angeordneten Vorratsfächer zu füllen; füllt man die Vorratsfächer in Achsrichtung der Sonden (bekannt aus der DE-B-28 39 255), benötigt man seitlich neben dem Magazin einen mindestens der Länge der Sonden entsprechenden freien Raum. Entnimmt man die Sonden durch Herausschieben der Sonden aus den Fächern in Längsrichtung der Sonden, ist ein weiterer Raum an der der Füllseite entgegengesetzten Seite des Magazins notwendig, der ebenfalls eine der Länge der Sonden entsprechende Grösse aufweisen muss.

Beim Ausfördern der Sonden aus Vertikalfächern kommt es durch Herabfallen der restlichen in einem Fach befindlichen Sonden um die dem Durchmesser einer Sonde entsprechende Höhe zu einer Beschädigung der Sonden.

Ein Herausschieben der Sonden in deren Längsrichtung ist für Sonden mit abgesetztem Durchmesser, beispielsweise bei Sonden mit besonderen Messköpfen, undurchführbar. Entnimmt man die Sonden quer zu ihrer Längserstreckung, wie es gemäss der DE-A-30 44 609 verwirklicht ist, ist eine die restlichen in den jeweiligen Vorratsfächern befindlichen Sonden tragende Vereinzelungsvorrichtung notwendig.

Die Erfindung bezweckt die Vermeidung dieser Nachteile und Schwierigkeiten und stellt sich die Aufgabe, ein Magazin der eingangs beschriebenen Art zu schaffen, bei welchem unter bestmöglicher Raumausnützung möglichst viele Sonden untergebracht werden können, bei welchem das Ein- und Ausbringen der Sonden nur einen sehr geringen Raumbedarf neben dem Magazin erfordert und bei welchem die Sonden möglichst schonend ausgegeben werden. Insbesondere soll es möglich sein, das Magazin in bereits bestehende Stahlwerke mit beengten Platzverhältnissen einbauen zu können.

Diese Aufgabe wird bei einer Vorrichtung der eingangs genannten Art erfindungsgemäss dadurch gelöst, dass das Magazin eine Mehrzahl übereinander angeordneter, mit einer Rollschräge für die Sonden versehene Vorratsfächer aufweist, deren vertikal übereinanderliegende Ausgabeöffnungen mittels eines Lifts zur Aufnahme jeweils einer Sonde aus einem der Vorratsfächer bestrichen sind, wobei der Lift von jeweils einer Ausgabeöffnung zur Aufrichtvorrichtung bringbar ist.

Zwecks einfacher Eingabe der Sonden in das Magazin sind zweckmässig die Vorratsfächer an den Eingabeöffnungen mittels winkelförmiger Klappen verschliessbar, die jeweils um die winkelbildende Kante am Magazin in Höhe des Bodens jedes Vorratsfaches schwenkbar gelagert sind.

Zwecks besonders schonender Ausgabe der Sonden sind vorteilhaft die Vorratsfächer an den Ausgabeöffnungen jeweils mit einer in Höhe der Decke jedes Vorratsfaches schwenkbar gelagerten Rückhalteklappe versehen.

Dabei ist zweckmässig die Rückhalteklappe oberhalb der der Ausgabeöffnung nächstliegenden Sonde gelagert und weist zwei im stumpfen Winkel zueinander stehende Fortsätze auf, von denen ein erster Fortsatz zur Ausgabeöffnung hin gerichtet und ein zweiter Fortsatz zu der der vordersten Sonde benachbarten Sonde hin gerichtet ist, wobei die Klappe aus einer mit dem ersten Fortsatz mit der vordersten Sonde kontaktierenden Position in eine mit dem zweiten Fortsatz mit der der vordersten Sonde benachbarten Sonde kontaktierenden Position unter Freigabe der vordersten Sonde schwenkbar ist.

Um ein besonders platzsparendes Aufrichten der Sonden zu ermöglichen, weist gemäss einer bevorzugten Ausführungsform die Aufrichtvorrichtung eine am Magazin schwenkbar gelagerte Schwinge auf, die mit ihrem frei schwenkbaren Ende an einem eine Sonde vom Lift übernehmenden Sondenhalter angelenkt ist.

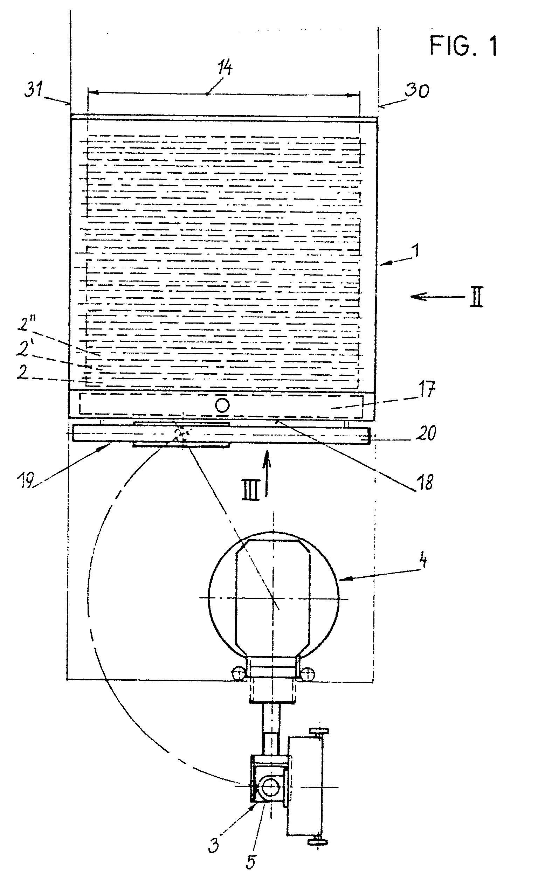

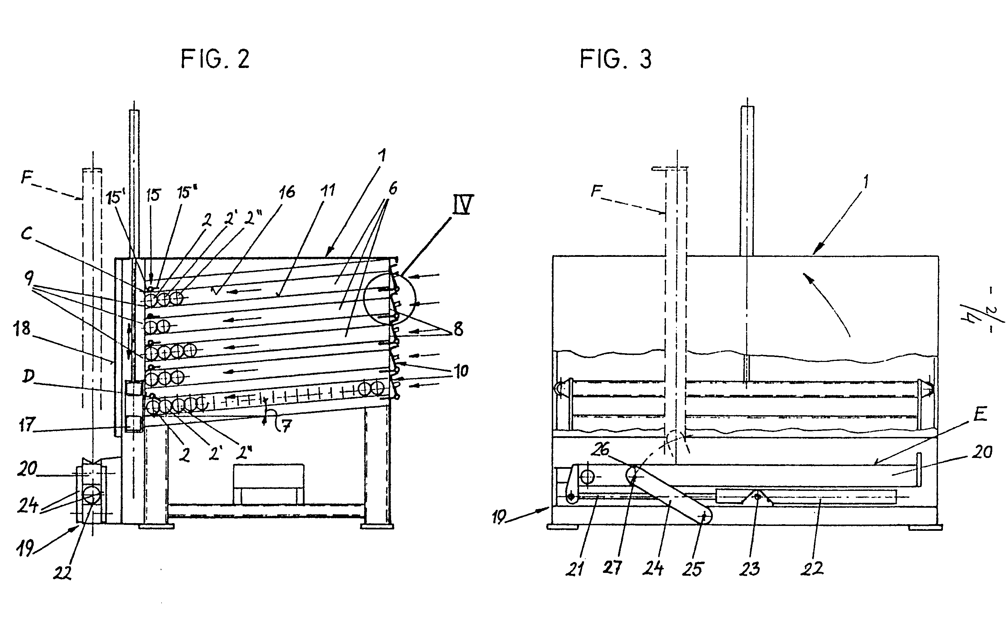

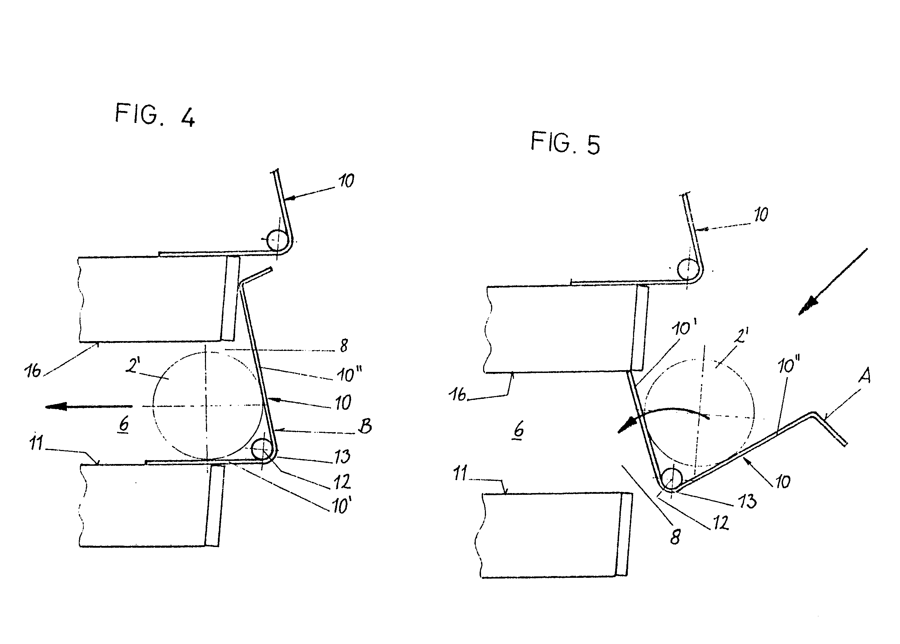

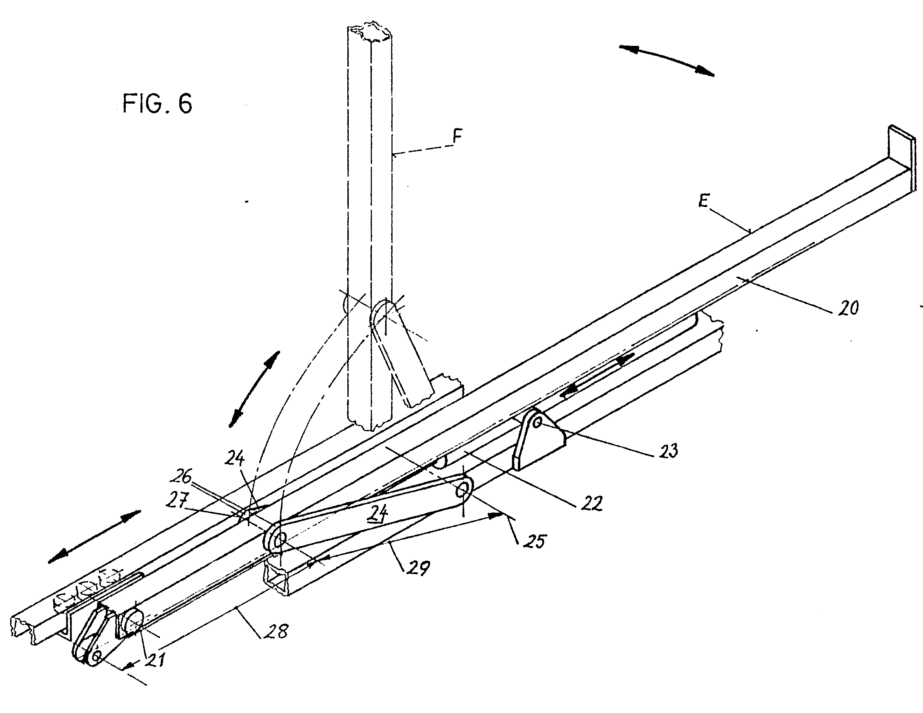

Die Erfindung ist nachfolgend anhand der Zeichnung an einem Ausführungsbeispiel näher erläutert, wobei Fig. 1 eine Draufsicht auf ein in einem Stahlwerk aufgestelltes Magazin veranschaulicht. Die Fig. 2 und 3 stellen teilweise geschnittene Seitenansichten gemäss den Pfeilen II und III der Fig. 1 dar. In den Fig. 4 und 5 ist ein Detail IV in grösserem Massstab gezeigt. Fig. 6 veranschaulicht ein Detail der Aufrichtvorrichtung im Schrägriss.

Ein Magazin 1 dient zur Aufnahme von Mess- und/oder Probenahmesonden 2, 2', 2'', . . ., die zur Durchführung von Messungen in bzw. für Probenahmen aus einem Stahlwerkskonverter dienen, indem eine Sonde dem Magazin 1 mittels einer Greifzange 3 eines Manipulators 4 entnommen und am unteren Ende einer in den Konverter vertikal einführbaren Lanze 5 aufgesteckt wird.

Wie insbesondere aus den Fig. 2 und 3 ersichtlich ist, weist das Magazin 1 vertikal übereinander angeordnete Vorratsfächer 6 zur Aufnahme der Sonden 2, 2', 2'', . . . auf, wobei in jedem Vorratsfach 6 eine Vielzahl von Sonden gelagert ist. Die Vorratsfächer 6 sind geringfügig um einen Winkel 7 geneigt angeordnet, so dass die an einer Eingabeöffnung 8 jedes Vorratsfaches 6 eingegebenen Sonden selbsttätig zu Ausgabeöffnungen 9 am anderen Ende der Vorratsfächer 6 rollen. Die vertikal übereinander angeordneten Eingabeöffnungen 8 sind mittels im Querschnitt winkelförmiger Klappen 10 verschliessbar, wobei jede Klappe in Höhe des Bodens 11 jedes Vorratsfaches 6 um eine parallel zur Längsrichtung der Eingabeöffnung 8 angeordnete Schwenkachse 12 schwenkbar gelagert ist. Die Schwenkachse ist an der winkelbildenden Kante 13 der winkelförmigen Klappe 10 vorgesehen.

Wie aus den Fig. 4 und 5 ersichtlich ist, wird jeweils eine Sonde 2' bei in Aufgabeposition A geschwenkter Klappe 10 zwischen die winkelförmig angeordneten Klappenteile 10', 10'' eingelegt und sodann die Klappe 10 in Schliessposition B geschwenkt, wobei die Sonde 2' aus der Klappe 10 in das Vorratsfach 6 rollt. Da die Schwenkachse 12 jeder Klappe 10 parallel zu den Eingabeöffnungen 8, die eine der Länge 14 der Sonden 2, 2', 2'', . . . entsprechende Länge aufweisen, angeordnet ist, rollen die Sonden innerhalb der Vorratsfächer 6 bis zu den Ausgabeöffnungen 9 bzw. bis zu den hinter den Ausgabeöffnungen bereits eingebrachten Sonden, ohne zu verkanten.

An den Ausgabeöffnungen 9 ist je Vorratsfach 6 eine Vereinzelungsvorrichtung 15 vorgesehen, die als Rückhalteklappe ausgebildet ist. Jede Rückhalteklappe 15 ist oberhalb der der Ausgabeöffnung nächstliegenden Sonde 2 an der Decke 16 des Vorratsfaches schwenkbeweglich gelagert und weist zwei im stumpfen Winkel zueinander stehende Fortsätze 15', 15'' auf. Ein erster Fortsatz 15' ist zur Ausgabeöffnung 9 hin gerichtet und kann in Schliessposition C der Rückhalteklappe 15 mit der ersten, an der Ausgabeöffnung 9 liegenden Sonde 2 in Kontakt gebracht werden. Der zweite Fortsatz 15'', der zu den der ersten Sonde 2 benachbarten Sonden 2', 2'', . . . hin gerichtet ist, kontaktiert in Freigabeposition D der Rückhalteklappe 15 die der ersten Sonde 2 benachbarte Sonde 2' und hält somit diese und die im jeweiligen Vorratsfach 6 dahinterliegenden Sonden 2'', . . . zurück, so dass nur die erste Sonde 2 aus dem Vorratsfach hinausrollen kann (vgl. in Fig. 2 das unterste Vorratsfach 6).

Die aus den Vorratsfächern 6 herausrollenden Sonden 2 werden von einem in vertikaler Richtung verfahrbaren Lift 17 aufgenommen, der sämtliche in vertikaler Richtung übereinander angeordneten Ausgabeöffnungen 9 bestreicht. Mittels des Liftes 17 wird jeweils eine Sonde 2 zu einer an der Stirnseite 18 des Magazins 1 angeordneten Aufrichtvorrichtung 19 gefördert. Die Aufrichtvorrichtung 19 weist einen Sondenhalter 20 auf, der aus einer horizontalen Position E in eine vertikale Position F schwenkbar ist. Zu diesem Zweck ist der Sondenhalter 20 an einem Ende mit der Kolbenstange 21 des Druckmittelzylinders 22 verbunden, der seinerseits um eine am Magazin 1 angeordnete Schwenkachse 23 schwenkbar ist.

Die Lagerung des Sondenhalters ist durch zwei parallel liegende Schwingen 24 bewerkstelligt, die mit einem Ende am Magazin 1 um eine Schwenkachse 25 schwenkbar gelagert sind und mit ihren frei schwenkbaren Enden 26 an dem Sondenhalter 20 gelenkig befestigt sind.

Die die frei schwenkbaren Enden 26 der Schwingen 24 mit dem Sondenhalter verbindende Gelenkachse 27 ist zwischen den Enden des Sondenhalters angeordnet, u.zw. in einem Abstand 28 von der Anlenkung des Druckmittelzylinderkolbens 21, der etwa der Länge 29 der Schwinge entspricht. Wie aus Fig. 6 ersichtlich ist, lässt sich dadurch der Sondenhalter in die aufrechte vertikale Position F schwenken, ohne dass dabei Platz seitlich neben dem Magazin 1 oder unterhalb des Magazins erforderlich ist.

Aus Fig. 1 ist zu erkennen, dass seitlich neben den in Fig. 1 eingezeichneten Begrenzungslinien 30, 31 des Magazins 1 kein Platz benötigt wird, u.zw. weder zum Füllen des Magazins noch bei der Entnahme einer Sonde, so dass sich das erfindungsgemässe Magazin insbesondere in bereits bestehende Stahlwerke unter bestmöglicher Platzeinsparung einplanen lässt.

**Patentansprüche**

1. Mess- und/oder Probenahmesondenmagazin, insbesondere für Stahlwerke, mit Sonden (2, 2', 2'', . . .) in horizontaler Lage aufnehmenden Vorratsfächern (6) und parallel zu den Sonden angeordneten Ein- und Ausgabeöffnungen (8, 9), wobei an den Ausgabeöffnungen (9) eine Fördervorrichtung zum Ausgeben der Sonden (2, 2', 2'', . . .) zu einer die Sonden in eine vertikale Position bringende Aufrichtvorrichtung (19) vorgesehen ist, dadurch gekennzeichnet, dass das Magazin (1) eine Mehrzahl übereinander angeordneter, mit einer Rollschräge für die Sonden (2, 2', 2'', . . .) versehene Vorratsfächer (6) aufweist, deren vertikal übereinanderliegenden Ausgabeöffnungen (9) mittels eines Lifts (17) zur Aufnahme jeweils einer Sonde aus einem der Vorratsfächer (6) bestrichen sind, wobei der Lift (17) von jeweils einer Ausgabeöffnung (9) zur Aufrichtvorrichtung (19) bringbar ist.

2. Mess- und/oder Probenahmesondenmagazin nach Anspruch 1, dadurch gekennzeichnet, dass die Vorratsfächer (6) an den Eingabeöffnungen (8) mittels winkelförmiger Klappen (10) verschliessbar sind, die jeweils um die winkelbildende Kante (13) am Magazin (1) in Höhe des Bodens (11) jedes Vorratsfaches (6) schwenkbar gelagert sind.

3. Mess- und/oder Probenahmesondenmagazin nach Anspruch 1 oder 2, dadurch gekennzeichnet, dass die Vorratsfächer (6) an den Ausgabeöffnungen (9) jeweils mit einer in Höhe der Decke (16) jedes Vorratsfaches (6) schwenkbar gelagerten Rückhalteklappe (15) versehen sind.

4. Mess- und/oder Probenahmesondenmagazin nach Anspruch 3, dadurch gekennzeichnet, dass die Rückhalteklappe (15) oberhalb der der Ausgabeöffnung (9) nächstliegenden Sonde (2) gelagert ist und zwei im stumpfen Winkel zueinander stehende Fortsätze (15', 15'') aufweist, von denen ein erster Fortsatz (15') zur Ausgabeöffnung (9) hin gerichtet und ein zweiter Fortsatz (15'') zu der der vordersten Sonde (2) benachbarten Sonde (2') hin gerichtet ist, wobei die Klappe (15) aus einer mit dem ersten Fortsatz (15') mit der vordersten Sonde (2) kontaktierenden Position (C) in eine mit dem zweiten Fortsatz (15'') mit der der vordersten Sonde (2) benachbarten Sonde (2') kontaktierenden Position (D) unter Freigabe der vordersten Sonde (2) schwenkbar ist.

5. Mess- und/oder Probenahmesondenmagazin nach den Ansprüchen 1 bis 4, dadurch gekennzeichnet, dass die Aufrichtvorrichtung (19) eine am Magazin (1) schwenkbar gelagerte Schwinge (24) aufweist, die mit ihrem frei schwenkbaren Ende (26) an einem eine Sonde (2) vom Lift (17) übernehmenden Sondenhalter (20) angelenkt ist.

## Revendications

1. Magasin pour sondes de mesure et/ou de prélèvement d'échantillons, en particulier pour aciéries, comprenant des cases de stockage (6) qui reçoivent des sondes (2, 2', 2'', . . .) en position horizontale et des ouvertures d'entrée et de sortie (8, 9) disposées parallèlement aux sondes, et dans lequel il est prévu, au droit des ouvertures de sortie (9), un dispositif transporteur destiné à transférer les sondes (2, 2', 2'', . . .) à un dispositif de redressement (19) qui place les sondes dans une position verticale, caractérisé en ce qu'il présente une pluralité de cases de stockage superposées (6), et munies d'un plan incliné de roulement pour les sondes (2, 2', 2'', . . .), et dont les ouvertures de sortie (9) disposées à la verticale les unes au-dessus des autres sont balayées au moyen d'un élévateur (17) destiné à recevoir à chaque fois une sonde sortant de l'une des cases de stockage (6), l'élévateur (17) pouvant être amené d'une ouverture de sortie (9) au dispositif de redressement (19).

2. Magasin pour sondes de mesure et/ou de prélèvement d'échantillons selon la revendication 1, caractérisé en ce que les cases de stockage (6) sont obturables, au droit des ouvertures d'entrée (8), au moyen de volets (8) à profil angulaire, dont chacun est monté sur le magasin (1) de manière à osciller, autour de l'arête (13) formant l'angle, au niveau du plancher (11) de chaque case de stockage (6).

3. Magasin pour sondes de mesure et/ou de prélèvement d'échantillons selon la revendication 1 ou la revendication 2, caractérisé en ce que les cases de stockage (6) sont munies, au droit des ouvertures de sortie (9), d'un volet de retenue (15) pour chacune, qui est monté pour osciller au niveau du plafond (16) de chaque case de stockage (6).

4. Magasin pour sondes de mesure et/ou de prélèvement d'échantillons selon la revendication 3, caractérisé en ce que le volet de retenue (15) est articulé au-dessus de la sonde (2) qui est la plus proche de l'ouverture de sortie (9), et présente deux prolongements (15', 15'') qui forment entre eux un angle obtus, dont un premier prolongement (15') est orienté vers l'ouverture de sortie (9) et un deuxième prolongement (15'') est orienté vers la sonde (2') voisine de la sonde (15'') est orienté vers la sonde (2') voisine de la sonde (2) extrême avant, le volet (15) pouvant basculer d'une position (C) dans laquelle le premier prolongement (15') est en contact avec la sonde extrême avant (2) à une position (D) dans laquelle le deuxième prolongement (15'') est en contact avec la sonde (2') voisine de la sonde extrême avant (2), en libérant la sonde extrême avant (2).

5. Magasin pour sondes de mesure et/ou de prélèvement d'échantillons selon les revendications 1 à 4, caractérisé en ce que le dispositif de redressement (19) présente un levier oscillant (24) monté oscillant sur le magasin (1) et qui est articulé par son extrémité librement oscillante (26) sur un porte-sonde (20) qui reçoit une sonde (2) de l'élévateur (17).

## Claims

1. A magazine for measuring and/or sampling porbes, in particular for steelworks, comprising storage compartments (6) accommodating probes (2, 2', 2'', . . .) in a horizontal position, and supply and delivery openings (8, 9) provided parallel to the probes, with a conveying means being arranged at the delivery openings (9) to deliver the probes (2, 2', 2'', . . .) to an erecting means (19) placing the probes into a vertical position, characterised in that the magazine (1) comprises a plurality of superposed storage comparterments (6) provided with a roll bevel for the probes (2, 2', 2'', . . .) and whose vertically superposed delivery openings (9) are passed by a lift (17) to receive one probe each from one of the storage compartments (6), the lift (17) being movable from one delivery opening (9) each to the erecting means (19).

2. A magazine for measuring and/or sampling probes according to claim 1, characterised in that the storage compartments (6) are closeable at the supply openings (8) by means of angularly shaped flaps (10), which are each mounted on the magazine (1) so as to be pivotable about the angle-forming edge (13) at the height of the bottom (11) of each storage compartment (6).

3. A magazine for measuring and/or sampling probes according to claim 1 or 2, characterised in that the storage compartments (6), at the delivery openings (9), are each provided with a retention flap (15) pivotably mounted at the height of the ceiling (16) of each storage compartment (6).

4. A magazine for measuring and/or sampling probes according to claim 3, characterised in that the retention flap (15) is mounted above the probe (2) lying next to the delivery opening (9) and comprises two projections (15', 15'') being at an obtuse angle to each other, a first projection (15') of which is directed towards the delivery opening (9) and a second projection (15'') is directed towards the probe (2') that is next to the foremost probe (2), the flap (15) being pivotable from a position (C) in contact with the foremost probe (2) by the first projection (15') into a position (D) in contact with the probe (2') next to the foremost probe (2) by the second projection (15''), under release of the foremost probe (2).

5. A magazine for measuring and/or sampling probes according to claims 1 to 4, characterised in that the erecting means (19) comprises a rocker (24) pivotably mounted on the magazine (1) and hinged, with its freely pivotable end (26), to a probe holder (20) taking over a probe (2) from the lift (17).

- 1/4 -

FIG. 1

- 2/4 -

FIG. 3

FIG. 2

9

FIG. 5

FIG. 4

FIG. 6